# EUROPEAN PATENT SPECIFICATION

(11) **EP 2 109 360 B1**
(45) Date of publication and mention of the grant of the patent: **04.09.2019**
(21) Application number: 08712923.5
(22) Date of filing: 02.01.2008
(51) Int. Cl.: A01K 15/02, A01K 27/00

(54) **AN ANIMAL TRAINING DEVICE USING A VIBRATION PROBE TO DELIVER A VIBRATION STIMULUS TO AN ANIMAL**
TIERTRAININGSVORRICHTUNG MIT VIBRATIONSSONDE ZUR ÜBERTRAGUNG EINES VIBRATIONSREIZES AUF EIN TIER
DISPOSITIF DE DRESSAGE D'ANIMAL UTILISANT UNE SONDE VIBRATOIRE POUR ADMINISTRER UN STIMULUS VIBRATOIRE À UN ANIMAL

(30) Priority: 03.01.2007 US 619452
(43) Date of publication of application: 21.10.2009
(73) Proprietor: Radio Systems Corporation, Knoxville, TN 37932 (US)
(72) Inventor: MAININI, Christopher, E., Knoxville, Tennessee 37922 (US); GRIFFITH, Keith, Oneida, Tennessee 37841 (US)
(74) Representative: Sawodny, Michael-Wolfgang
(86) International application number: PCT/US2008/000012
(87) International publication number: WO 2008/085812

(56) References cited:
- EP-A1- 1 645 182
- US-A- 4 180 013
- US-A1- 2003 116 099
- US-A1- 2005 059 909
- US-A1- 2005 277 855
- US-A1- 2006 196 445
- US-A1- 2006 196 445
- US-B1- 6 360 697
- US-B1- 6 799 537
- US-B2- 6 928 958
- US-B2- 6 928 958

## Description

### CROSS-REFERENCE TO RELATED APPLICATIONS

Not Applicable

### STATEMENT REGARDING FEDERALLY SPONSORED RESEARCH OR DEVELOPMENT

Not Applicable

### BACKGROUND OF THE INVENTION

### 1. Field of Invention

This invention pertains to an animal training device for delivering a vibration stimulus to an animal. More particularly, this invention pertains to an animal training device for delivering a vibration stimulus to the animal by way of a vibration probe that is in physical contact with the skin of the animal.

### 2. Description of the Related Art

Many animal training systems include a vibration stimulus device for delivering a vibration stimulus to an animal. Studies have revealed that animals respond to a vibration stimulus used either as a primary deterrent or as a warning stimulus that is followed by a more intense deterrent, such as an electrical stimulus. Whether a vibration stimulus is effective as a deterrent or merely a warning stimulus depends on factors such as the breed, personality, sensitivity, and coat type of the animal. Additionally, a vibration stimulus may be effectively used as the primary deterrent of an animal training system for a period of time, but cease to be effective when the animal overcomes the initial startling effect of the vibration stimulus and discovers that the vibration stimulus does not trigger the animal's sensation of pain. This process is known as habituation. When the animal becomes accustomed to a vibration stimulus by way of habituation or the animal does not respond to a vibration stimulus as a primary deterrent, a more intense stimulus, such as an electrical stimulus, must be used to discourage the animal's undesirable behavior.

When a vibration stimulus can be used in the stead of a more intense stimulus, such as an electrical stimulus, it is desired. The preference for a vibration stimulus is because many pet owners view more intense stimuli, such as an electrical stimulus, as harmful or inhumane to the animal. Consequently, pet owners prefer a vibration stimulus over an electrical stimulus. Additionally, particular animals are hypersensitive to the extent that an intense stimulus, such as an electrical stimulus, would unnecessarily distress the animal both physically and psychologically. However, conventional vibration stimulus devices have been unable to provide a vibration stimulus effective enough to replace a more intense stimulus, such as an electrical stimulus, in accordance with the reasons discussed above. Conventional vibration stimulus devices include a vibration source disposed within a housing. The housing is typically a box-type structure that is mounted at the outside face of a pet collar, that is the housing is mounted to the face of the pet collar that is not in contact with the animal wearing the collar. These conventional devices are designed to generate a vibration in response to an undesirable behavior exhibited by the animal. However, these devices are limited in that the generated vibration is not contained or focused toward to the animal. Instead, a significant portion of the generated vibration is lost because the housing is not secured against the animal, but is vibrating freely at the outside face of the pet collar. Additionally, conventional devices are limited in that the generated vibration must be transferred from the housing, through the pet collar, through the animal's fur, and to the animal's skin. Consequently, the generated vibration is dampened by the housing, the pet collar, and the animal's fur, reducing the effectiveness of the vibration stimulus. As a result, a vibration stimulus device that is effective to the extent of being a primary deterrent, or otherwise replacing more intense stimuli, must be secured in direct contact with the animal's skin. Closest state of the art is document EP-A-1 645 182. From EP-A-1 645 182 a barking preventing collar for preventing a dog from barkling as known. The collar is attached to the neck of the dog and provided with a vibration unit for carrying out a vibration when sensing the bark of the dog.

US-A- 4,180,013 shows an animal behavioral control device having a microphone responsive to both ambient noise around the animal and to emitted sound from the animal such as barking for extending an electrical signal corresponding only to the emitted sound and a vibrating apparatus being activated in the presence of the electrical signal for vibrating the area of the animal's neck nearest the vocal cords to cause the animal to be distracted either in a first range of preferred vibration in a first embodiment of the invention, or to swallow in a second range of preferred vibration in a second embodiment of the invention thereby substantially preventing the animal from emitting the barking sound.

In US- A- 2005/0277855 a device for suppressing roaring of pet that enables the pet owner to control the action of the pet according to circumstances, with reduced power consumption and low running cost is shown.

From US-A- 6,360,697 an animal control device which directs a pressure pulse wave to an animal as a negative stimulus to deter undesired behavior has made shown. The animal control device includes a collar worn by an animal with a pressure pulse generator probe in contact with the animal's skin. The pressure pulse wave applied may be adjustable commensurate with the severity of undesired behavior.

US-A- 6,799,537 shows a pet training device comprising a wireless receiving section worn by a pet, the wireless receiving section including a voice unit, a wireless receiving unit, a detection unit, a second microprocessor unit, a second display unit, a motor vibration unit, a high voltage low current discharge unit, and a decoder unit, and a wireless transmission section held by an owner has made shown. In a case of the pet continuously barking, the owner may activate the wireless transmission section to control the wireless receiving section to play a recorded message to order the pet to stop barking.

### BRIEF SUMMARY OF THE INVENTION

In accordance with the various features of the present invention there is provided a vibration stimulus delivery device for delivering a vibration stimulus to an animal by way of a vibration probe secured in physical contact with the skin of the animal according to claim 1.

The vibration stimulus delivery device includes a vibration probe, a stimulus trigger detection device, and a carrying device. The vibration probe and the stimulus trigger detection device are secured to the carrying device, which is a pet collar. The carrying device is secured to the animal such that the animal carries the vibration probe and the stimulus trigger detection device. The vibration probe is disposed on the carrying device such that when the carrying device is secured to the animal, the vibration probe is secured in physical contact with the skin of the animal. The stimulus trigger detection device is responsive to a stimulus trigger. A stimulus trigger includes a signal generated by an animal training system or an undesirable behavior exhibited by the animal, such as a barking. For example, the stimulus trigger detection device includes a receiver adapted to communicate with an electronic pet confinement system. The stimulus trigger detection device is in electrical communication with the vibration probe such that when the stimulus trigger detection device responds to a stimulus trigger, the vibration probe is activated. When activated, the vibration probe generates a vibration. Because the vibration probe is secured in physical contact with the skin of the animal, the vibration generated by the vibration probe provides an effective vibration stimulus to the animal.

### BRIEF DESCRIPTION OF THE SEVERAL VIEWS OF THE DRAWINGS

The above-mentioned features of the invention will become more clearly understood from the following detailed description of the invention read together with the drawings in which:
Figure 1 is a perspective view of one embodiment the vibration probe device in accordance with the various features of the present invention;
Figure 2 illustrates the vibration probe device of Figure 1 secured in physical contact with the skin of the animal in accordance with the various features of the present invention;
Figure 3 is an alternative embodiment of the vibration probe device illustrating the vibration probe and the stimulus trigger detection device as a single structure;
Figure 4 is an exploded view of the vibration probe in accordance with the various features of the present invention;
Figure 5 is an alternative embodiment of the vibration probe including a motor disposed outside the vibration probe;
Figure 6 is an alternative embodiment of the vibration probe including a single motor driving multiple vibration probes;
Figure 7 illustrates one embodiment of the gearbox of the alternative embodiment of the vibration probe illustrated in Figure 6;
Figure 8 is an alternative embodiment of the vibration probe whereby the vibration generated by the vibration probe has a direction that is perpendicular to the skin of the animal;
Figure 9 illustrates one embodiment of the gearbox of the alternative embodiment of the vibration probe illustrated in Figure 8; and
Figure 10 is a block diagram illustrating the operation of one embodiment of the vibration probe device.

### DETAILED DESCRIPTION OF THE INVENTION

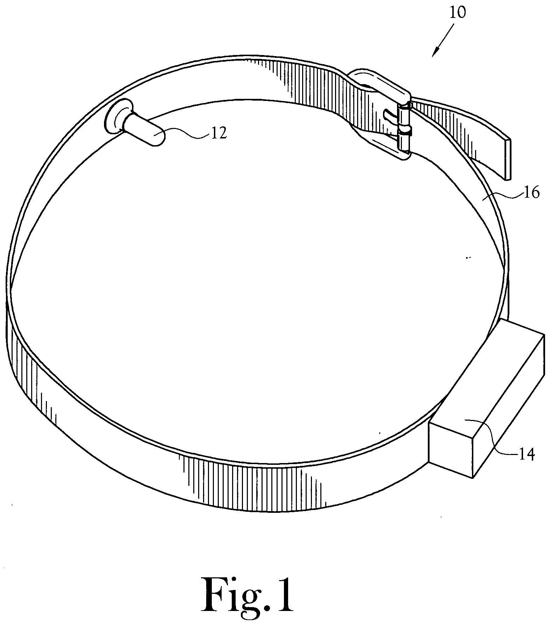

One embodiment of a vibration stimulus delivery device for delivering a vibration stimulus to an animal by way of a vibration probe secured in physical contact with the skin of the animal and constructed in accordance with the various features of the present invention is illustrated generally at **10** in Figure 1. The vibration stimulus delivery device **10** includes a vibration probe, a stimulus trigger detection device, and a carrying device. The vibration probe and the stimulus trigger detection device are secured to the carrying device, which is a pet collar. The carrying device is secured to the animal such that the animal carries the vibration probe and the stimulus trigger detection device. The vibration probe is disposed on the carrying device such that when the carrying device is secured to the animal, the vibration probe is secured in physical contact with the skin of the animal. The stimulus trigger detection device is responsive to a stimulus trigger. A stimulus trigger includes a signal generated by an animal training system or an undesirable behavior exhibited by the animal, such as barking. For example, the stimulus trigger detection device includes a receiver adapted to communicate with an electronic pet confinement system. The stimulus trigger detection device is in electrical communication with the vibration probe such that when the stimulus trigger detection device responds to a stimulus trigger, the vibration probe is activated. When activated, the vibration probe generates a vibration. Because the vibration probe is secured in physical contact with the skin of the animal, the vibration generated by the vibration probe provides an effective vibration stimulus to the animal.

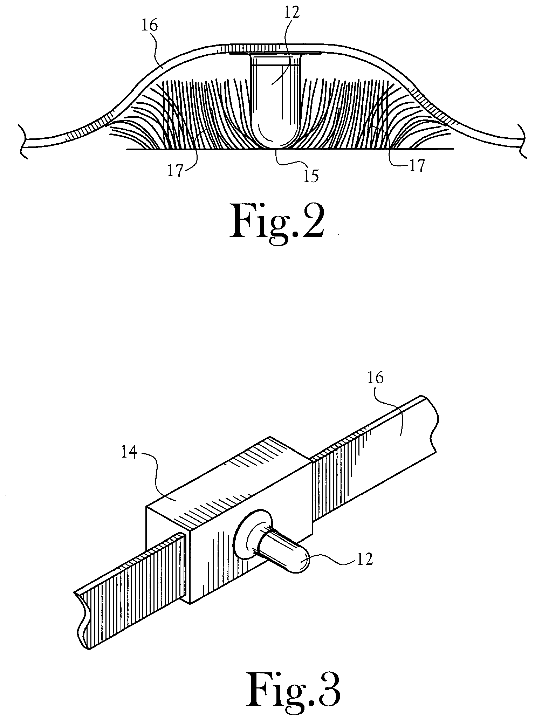

Figure 1 illustrates one embodiment of the vibration stimulus delivery device **10** in accordance with the various features of the present invention. The vibration stimulus delivery device **10** includes a vibration probe **12,** a stimulus trigger detection device **14,** and a carrying device **16.** The carrying device **16** is a pet collar that is adapted to be secured to the animal. In the illustrated embodiment, the carrying device **16** is a pet collar with a buckle. The vibration probe **12** and the stimulus trigger detection device **14** are secured to the carrying device **16,** which is secured to the animal such that the animal carries the vibration probe **12** and the stimulus trigger detection device **14.** The vibration probe **12** is disposed on the carrying device **16** such that when the carrying device **16** is secured to the animal, the vibration probe **12** is secured in physical contact with the skin of the animal. More specifically, the vibration probe **12** penetrates the animal's fur and physically engages the skin of the animal, as depicted in Figure 2. In Figure 2, the animal's skin is represented at **15** and the animal's fur is represented at **17.** The vibration probe **12** is secured in physical contact with the animal's skin **15** by the carrying device **16.** In the illustrated embodiment, the vibration probe **12** is secured to the inside face of the carrying device **16,** namely the face of the carrying device **16** that opens toward the animal, such that the vibration probe **12** is positioned between the carrying device **16** and the animal's skin **15.** Because the carrying device **16** is secured snuggly about the animal's neck, the carrying device **16** secures the vibration probe **12** in physical contact with the animal's skin **15** such that the animal's fur **17** parts around the vibration probe **12.**

An alternative embodiment of the vibration stimulus delivery device **10** in accordance with the various features of the present invention is illustrated at Figure 3. The illustrated alternative embodiment includes the vibration probe **12** secured to the stimulus trigger detection device **14** such that the vibration probe **12** extends outwardly therefrom. The stimulus trigger detection device **14** is secured to the carrying device **16** such that the vibration probe **12** is secured in physical contact with the skin of the animal as previously discussed. It should be noted that various configurations of the vibration probe **12,** the stimulus trigger detection device **14,** and the carrying device **16** are achievable without departing from the scope or spirit of the present invention so long as the vibration probe **12** is secured in physical contact with skin of the animal.

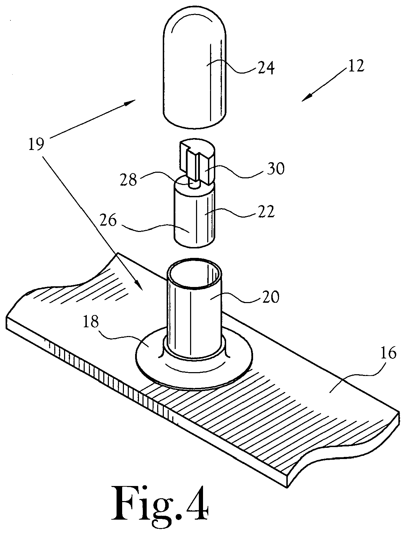

Figure 4 illustrates one embodiment of the vibration probe **12** in accordance with the various features of the present invention. The vibration probe **12** includes a vibration probe housing **19** and a vibrator **22.** In the illustrated embodiment, the vibration probe housing **19** includes a base portion **18,** a sheath portion **20,** and a casing **24.** The base portion **18** is secured to the inside face of the carrying device **16** such that the vibration probe **12** is carried by the animal as discussed above. The sheath portion **20** is secured to the base portion **18** and provides a housing for the vibrator **22,** which is disposed within the sheath portion **20.** The casing **24** is disposed around the sheath portion **20,** encloses the vibrator **22** within the sheath portion **20,** and abuts the base portion **18** such that neither the sheath portion **20** nor the vibrator **22** is exposed. The casing **24** is constructed of a material that does not significantly dampen the vibration generated by the vibrator **22.** In the illustrated embodiment, the casing **24** is constructed of a moderately rigid rubber. Those skilled in the art will recognize that the casing **24** can be constructed of another material, such as a plastic, without departing from the scope or spirit of the present invention. The casing **24** protects the vibrator **22** from elements such as pet fur and environmental debris. It should be noted that various embodiments of the vibration probe housing **19** are achievable without departing from the scope or spirit of the present invention.

When activated, the vibrator **22** generates a vibration to the extent that the vibration probe housing **19,** and consequently the vibration probe **12,** vibrates. In the illustrated embodiment, the vibrator **22** includes a motor **26,** a shaft **28,** and a mass **30.** The motor **26** is mechanically engaged with a first end of the shaft **28** such that the motor **26** rotates the shaft **28** about its longitudinal axis. The mass **30** is eccentrically secured to a second end of the shaft **28,** which is opposite the first end of the shaft **28.** Because the mass **30** is eccentrically secured to the shaft **28,** a vibration is generated when the motor **26** rotates the shaft **28.** It should be noted that various embodiments of the vibrator **22** are achievable without departing from the scope or spirit of the present invention so long as the vibrator **22** generates the vibration within the vibration probe housing **19.**

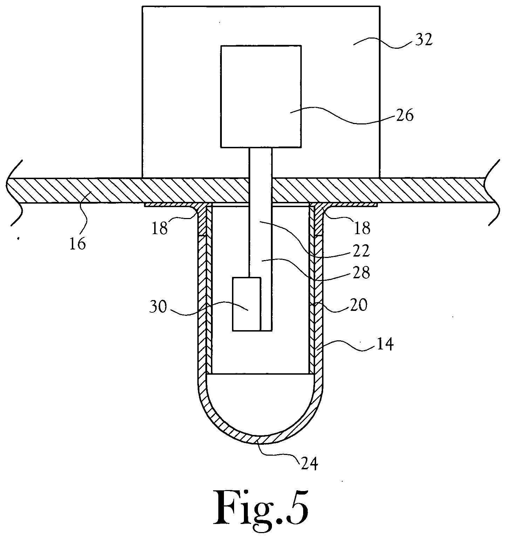

Figure 5 illustrates an alternative embodiment of the vibrator **22** of the vibration probe **12** in accordance with the various features of the present invention. In the alternative embodiment, the motor **26** is disposed within a motor housing **32,** which is secured to the carrying device **16** proximate to the vibration probe **12.** In the illustrated embodiment, the motor housing **32** is secured to the carrying device **16** opposite the vibration probe **12** with respect to the carrying device **16.** In other words, the motor housing **32** is secured to the outside face of the carrying device **16,** and the vibration probe **12** is secured to the inside face of the carrying device **16.** The shaft **28,** which is mechanically engaged with the motor **26** as discussed above, extends from the motor housing **32,** through an opening in the carrying device **16,** through the base portion **18,** and to the sheath portion **20** such that the mass **30** is eccentrically secured to the shaft **28** within the vibration probe **12.** In other words, in this alternative embodiment of the vibrator **22,** the motor **26** is not disposed within the vibration probe **12.** However, in accordance with the various features of the present invention, the source of the vibration, namely the configured shaft **28** and mass **30,** is included within the vibration probe **12.**

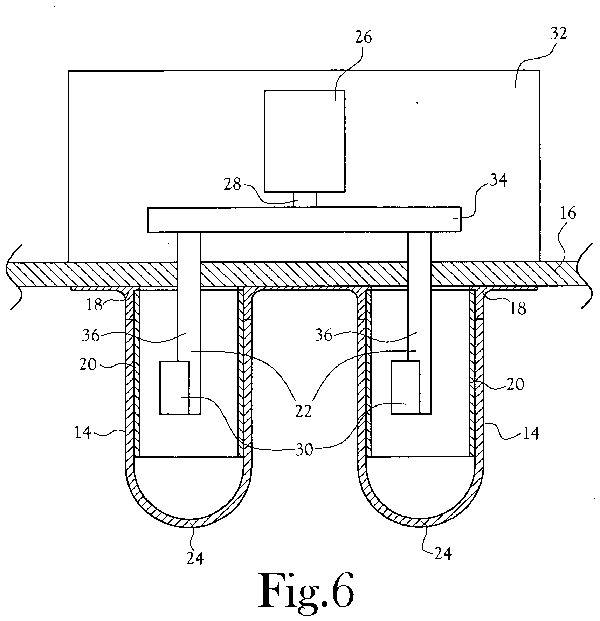

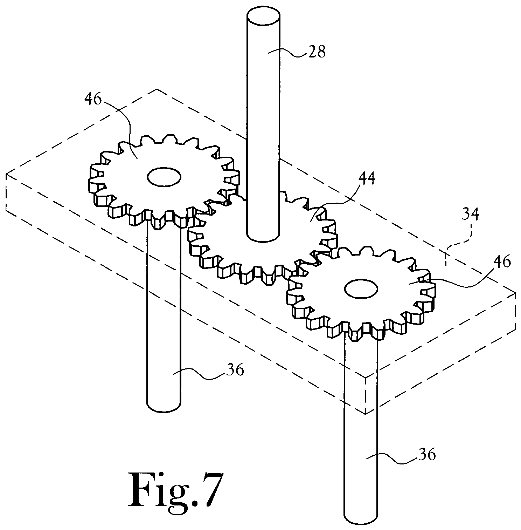

Figure 6 illustrates another alternative embodiment of the vibrator **22** of the vibration probe **12** in accordance with the various features of the present invention. In this alternative embodiment, the motor **26** and a gearbox **34** are disposed within the motor housing **32.** The shaft **28,** which is mechanically engaged with the motor **26** at the first end, is mechanically engaged with the gearbox **34** at the second end. The gearbox **34** is mechanically engaged with secondary shafts **36** such that when the motor **26** rotates the shaft **28,** the secondary shafts **36** rotate about their respective longitudinal axes. The gearbox **34** of the illustrated embodiment is depicted in Figure 7. The gearbox **34** includes a primary gear **44** and secondary gears **46.** The primary gear **44** is secured to the shaft **28,** and the secondary gears **46** are secured to respective secondary shafts **36.** The teeth of the primary gear **44** are operably engaged with the teeth of the secondary gears **46** such that when the primary gear **44** is rotated by the shaft **28,** the secondary gears **46** rotate, rotating the secondary shafts **36**. Those skilled in the art will recognize that the gearbox **34** can be configured in a way other than the illustrated configuration without departing from the scope or spirit of the present invention.

Returning to Figure 6, each secondary shaft **36** extends from the motor housing **32,** through openings in the carrying device **16,** through each secondary shaft's **36** respective base portion **18,** and to each secondary shaft's **36** respective sheath portion **20** such that each respective mass **30** is eccentrically secured to its respective secondary shaft **36** within each respective vibration probe **12.** In other words, in this alternative embodiment of the vibrator **22,** a single motor **26** drives two vibration probes **12.**

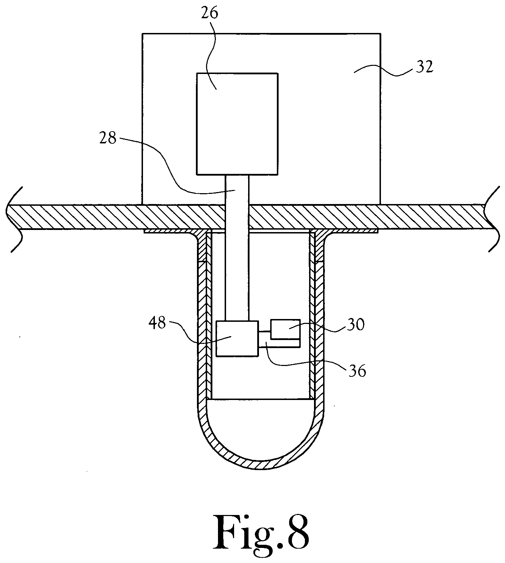

Figure 8 illustrates an alternative embodiment of the vibrator **22** of the vibration probe **12** in accordance with the various features of the present invention. In this alternative embodiment, the vibrator **22** includes a gearbox **48** disposed within the sheath portion **20.** In the illustrated embodiment, the shaft **28,** which is mechanically engaged with the motor **26** as discussed above, extends from the motor housing **32,** through an opening in the carrying device **16,** through the base portion **18,** and to the sheath portion **20,** where the shaft **28** is mechanically engaged with the gearbox **48.** The gearbox **48** is mechanically engaged with a secondary shaft **36** such that the secondary shaft **36** is positioned perpendicular to the shaft **28.** As with previous embodiments, the mass **30** is eccentrically secured to the secondary shaft **36.** When the motor **26** rotates the shaft **28,** the secondary shaft **36** rotates about its longitudinal axis, generating a vibration with a direction that is parallel to the shaft **28** and perpendicular to the skin of the animal.

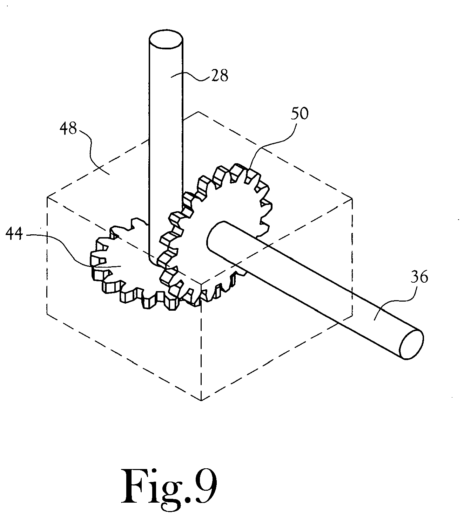

Figure 9 illustrates the gearbox **48** of the vibrator **22** illustrated in Figure 8. The gearbox **48** includes a primary gear **44** and a secondary gear **50.** The primary gear **44** is secured to the shaft **28,** and the secondary gear **50** is secured to the secondary shaft **36.** The teeth of the primary gear **44** are operably engaged with the teeth of the secondary gear **50** such that when the primary gear **44** is rotated by the shaft **28,** the secondary gear **50** rotates, rotating the secondary shaft **36.** Those skilled in the art will recognize that the gearbox **48** can be configured in a way other than the illustrated configuration without departing from the scope or spirit of the present invention.

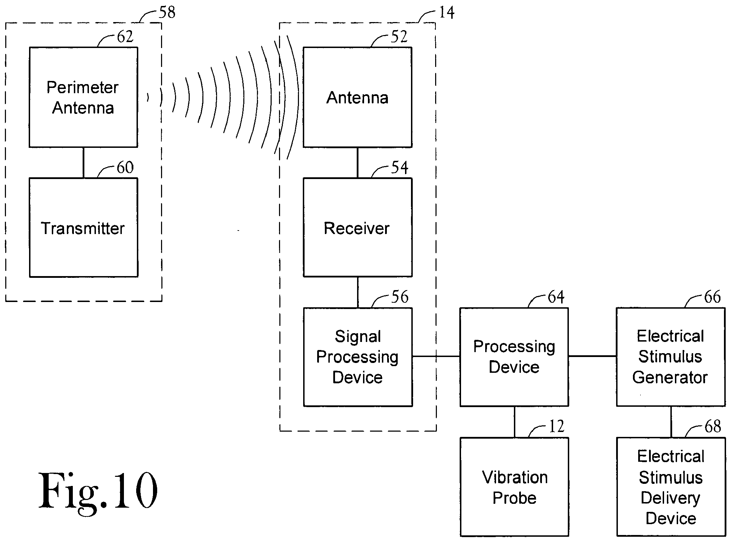

Figure 10 is a block diagram illustrating various operational features of one embodiment of the vibration stimulus delivery device **10** in accordance with the various features of the present invention. In the illustrated embodiment, the stimulus trigger detection device **14** is a component of an electronic pet confinement system. Consequently, the stimulus trigger is the signal emitted by the perimeter-defining antenna of the electronic pet confinement system. The stimulus trigger detection device **14** includes an antenna **52,** a receiver **54,** and a signal processing device **56.** The receiver **54** is in electrical communication with the antenna **52** and the processing device **56** and is in wireless communication with the signal transmitting portion of the electronic pet confinement system, which is depicted at **58.** The signal transmitting portion of the electronic pet confinement system includes a transmitter **60** and a perimeter antenna **62.** The perimeter antenna **62** defines the perimeter within which the animal is confined, such as the yard of the animal's owner. The perimeter antenna **62** is in electrical communication with the transmitter **60,** which transmits a wireless signal, namely the stimulus trigger, by way of the perimeter antenna **62** such that the wireless signal radiates from the perimeter antenna **62.** The receiver **54,** by way of the antenna **52,** is adapted to receive the wireless signal transmitted by the perimeter antenna **62** when the stimulus trigger detection device **14,** which is carried by the animal, approaches the perimeter antenna **62.** When the receiver **54** receives the wireless signal from the perimeter antenna **62,** the receiver **54** relays the wireless signal to the signal processing device **56.** The signal processing device **56** processes the received signal to determine whether the received signal was transmitted by the transmitter **60.** When the signal processing device **56,** which is in electrical communication with a processing device **64,** determines that the received signal was transmitted by the transmitter **60,** the signal processing device **56** indicates such to the processing device **64.** In other words, the stimulus trigger detection device **14** responds to the stimulus trigger. The processing device **64** then activates the vibration probe **12.**

The effect of the vibration stimulus delivery device **10** is that when the animal approaches the perimeter of the electronic pet confinement system defined by the perimeter antenna **62,** namely the perimeter of the yard, the vibration stimulus delivery device **10** delivers a vibration stimulus to the animal by way of the vibration probe **12,** discouraging the animal from leaving the yard. Because the vibration probe **12** is the source of the vibration and is secured in physical contact with the skin of the animal, the delivered vibration stimulus is effective as a deterrent. However, if the user of the illustrated embodiment of the vibration stimulus delivery system **10** desires to use the vibration stimulus as a warning and a more intense stimulus as the deterrent, the illustrated embodiment includes an electrical stimulus generator **66** in electrical communication with the processing device **64** and an electrical stimulus delivery device **68.** When the vibration stimulus delivery system **10** delivers a vibration stimulus to the animal, and the animal continues to approach the perimeter defined by the perimeter antenna **62,** the processing device **64** activates the electrical stimulus generator **66,** which generates an electrical stimulus that is delivered to the animal by way of the electrical stimulus delivery device **68.** The electrical stimulus delivery device **68** includes two electrodes in physical contact with the skin of the animal.

It should be noted that one embodiment of the vibration stimulus delivery device **10** includes the vibration probe **12** as the sole device for delivering a stimulus to the animal. Another embodiment of the vibration stimulus delivery device **10** includes the vibration probe **12** for delivering a vibration stimulus to the animal and another device for delivering a stimulus other than a vibration stimulus to the animal. It should also be noted that various devices for delivering various types of stimuli, such as an electrical or audible stimulus, can be used in combination with the vibration probe **12** without departing from the scope or spirit of the present invention. Additionally, those skilled in the art will recognize that the stimulus trigger detection device **14** can be adapted to communicate with animal training systems other than electronic pet confinement systems without departing from the scope or spirit of the present invention. Those skilled in the art will also recognize that the stimulus trigger detection device **14** can respond to a stimulus trigger other than a signal transmitted by an animal training system without departing from the scope or spirit of the present invention. For example, the stimulus trigger detection device **14** includes a bark detector such as a microphone or a vibration detector such that the stimulus trigger detection device responds to the undesired barking of the animal.

From the foregoing description, those skilled in the art will recognize that a device for delivering an effective vibration stimulus offering advantages over the prior art has been provided. The device provides a vibration probe secured in physical contact with the skin of the animal. Further, the device provides a vibrator disposed within the vibration probe such that the vibration generated by the vibrator transfers effectively to the animal.

## Claims

1. A vibration stimulus delivery device (10) for delivering a vibration stimulus to an animal, said vibration stimulus delivery device (10) comprising:
a pet collar adapted to be secured to an animal;
a stimulus trigger detection device (14) secured to said pet collar so as to extend from an outside face of said pet collar outwardly from the animal, said stimulus trigger detection device (14) responsive to a stimulus trigger; and
a vibration probe (12) including a probe housing (19) and a vibrator (22), **characterized in that** said probe housing (19) extending from an inside face of said pet collar inwardly toward the animal to physically contact the animal when said pet collar is secured to the animal, said vibrator (22) disposed within said probe housing (19), said vibrator (22) in electrical communication with said stimulus trigger detection device (14) and producing a vibration stimulus when said stimulus trigger detection device (14) responds to the stimulus trigger, said vibration stimulus being delivered to said animal by said vibration probe (12).

2. The vibration stimulus delivery device of Claim 1 wherein the stimulus trigger is an electrical signal.

3. The vibration stimulus delivery device of Claim 2 wherein the stimulus trigger is a wireless signal.

4. The vibration stimulus delivery device of Claim 2 wherein an animal training system generates and transmits the stimulus trigger.

5. The vibration stimulus delivery device of Claim 1 wherein the stimulus trigger is a bark from the animal.

6. The vibration stimulus delivery device of Claim 1 wherein said vibrator includes a motor (26), a shaft (28), and a mass (30) such that the motor (26) is mechanically engaged with a first end of the shaft (28) such that the motor (26) rotates the shaft (28) about a longitudinal axis of the shaft (28), and the mass is eccentrically secured to a second end of the shaft (28) opposite the first end to produce a vibration when the motor (26) rotates the shaft (28).

7. The vibration stimulus delivery device of Claim 6 wherein said motor (26) is disposed within said probe housing of said vibration probe.

8. The vibration stimulus delivery device of Claim 6 wherein said vibrator generates a vibration with a direction parallel to the shaft (28).

9. The vibration stimulus delivery device of Claim 1 wherein said vibration probe is secured to the stimulus trigger detection device.

## Patentansprüche

1. Vibrationsreizabgabevorrichtung (10) zum Abgeben eines Vibrationsreizes an ein Tier, wobei die Vibrationsreizabgabevorrichtung (10) Folgendes umfasst:
ein Haustierhalsband, das dafür eingerichtet ist, an einem Tier befestigt zu werden;
eine Reizauslöser-Detektionsvorrichtung (14), die derart an dem Haustierhalsband befestigt ist, dass sie sich von einer Außenseite des Haustierhalsbands von dem Tier nach außen erstreckt, wobei die Reizauslöser-Detektionsvorrichtung (14) auf einen Reizauslöser anspricht; und
eine Vibrationssonde (12), die ein Sondengehäuse (19) und einen Vibrator (22) beinhaltet,
**dadurch gekennzeichnet, dass** sich das Sondengehäuse (19) von einer Innenseite des Haustierhalsbands nach innen zu dem Tier erstreckt, um das Tier physisch zu berühren, wenn das Haustierhalsband an dem Tier befestigt wird, wobei der Vibrator (22) in dem Sondengehäuse (19) angeordnet ist, wobei der Vibrator (22) in elektrischer Verbindung mit der Reizauslöser-Detektionsvorrichtung (10) steht und einen Vibrationsreiz erzeugt, wenn die Reizauslöser-Detektionsvorrichtung (14) auf den Reizauslöser anspricht, wobei der Vibrationsreiz durch die Vibrationssonde (12) an das Tier abgegeben wird.

2. Vibrationsreizabgabevorrichtung nach Anspruch 1, wobei der Reizauslöser ein elektrisches Signal ist.

3. Vibrationsreizabgabevorrichtung nach Anspruch 2, wobei der Reizauslöser ein drahtloses Signal ist.

4. Vibrationsreizabgabevorrichtung nach Anspruch 2, wobei ein Tiertrainingssystem den Reizauslöser erzeugt und überträgt.

5. Vibrationsreizabgabevorrichtung nach Anspruch 1, wobei der Reizauslöser ein Bellen des Tieres ist.

6. Vibrationsreizabgabevorrichtung nach Anspruch 1, wobei der Vibrator einen Motor (26), eine Welle (28) und eine Masse (30) beinhaltet, sodass der Motor (26) mechanisch in Eingriff mit einem ersten Ende der Welle (28) ist, sodass der Motor (26) die Welle (28) um eine Längsachse der Welle (28) dreht, und wobei die Masse exzentrisch an einem zweiten Ende der Welle (28) befestigt ist, das dem ersten Ende gegenüberliegt, um eine Vibration zu erzeugen, wenn der Motor (26) die Welle (28) dreht.

7. Vibrationsreizabgabevorrichtung nach Anspruch 6, wobei der Motor (26) in dem Sondengehäuse der Vibrationssonde angeordnet ist.

8. Vibrationsreizabgabevorrichtung nach Anspruch 6, wobei der Vibrator eine Vibration mit einer Richtung parallel zu der Welle (28) erzeugt.

9. Vibrationsreizabgabevorrichtung nach Anspruch 1, wobei die Vibrationssonde an der Reizauslöser-Detektionsvorrichtung befestigt ist.

## Revendications

1. Dispositif de délivrance de stimulus vibratoire (10) pour délivrer un stimulus vibratoire à un animal, ledit dispositif de délivrance de stimulus vibratoir (10) comprenant :
un collier pour animal domestique adapté pour être attaché à un animal;
un dispositif de détection de déclenchement de stimulus (14) attaché audit collier pour animal domestique de façon à s'étendre depuis une face extérieure dudit collier pour animal domestique à l'extérieur de l'animal, ledit dispositif de détection de déclenchement de stimulus (14) réagissant à un déclenchement de stimulus; et
une sonde vibratoire (12) incluant un boîtier de sonde (19) et un vibreur (22),
**caractérisé en ce que** ledit boîtier de sonde (19) s'étend depuis une face intérieure dudit collier pour animal domestique à l'intérieur vers l'animal pour venir physiquement en contact avec l'animal lorsque ledit collier pour animal domestique est attaché à l'animal, ledit vibreur (22) étant disposé au sein dudit boîtier de sonde (19), ledit vibreur (22) étant en communication électrique avec ledit dispositif de détection de déclenchement de stimulus (10) et produisant un stimulus vibratoire lorsque ledit dispositif de détection de déclenchement de stimulus (14) réagit au déclenchement de stimulus, ledit stimulus vibratoire étant délivré audit animal par ladite sonde vibratoire (12).

2. Dispositif de délivrance de stimulus vibratoire selon la revendication 1, dans lequel le déclenchement de stimulus est un signal électrique.

3. Dispositif de délivrance de stimulus vibratoire selon la revendication 2, dans lequel le déclenchement de stimulus est un signal sans fil.

4. Dispositif de délivrance de stimulus vibratoire selon la revendication 2, dans lequel un système de dressage d'animal génère et transmet le déclenchement de stimulus.

5. Dispositif de délivrance de stimulus vibratoire selon la revendication 1, dans lequel le déclenchement de stimulus est un aboiement de l'animal.

6. Dispositif de délivrance de stimulus vibratoire selon la revendication 1, dans lequel ledit vibreur inclut un moteur (26), un arbre (28), et une masse (30) si bien que le moteur (26) est enclenché mécaniquement avec une première extrémité de l'arbre (28) pour que le moteur (26) fasse tourner l'arbre (28) autour d'un axe longitudinal de l'arbre (28), et la masse est attachée de façon excentrique à une seconde extrémité de l'arbre (28) opposée à la première extrémité pour produire une vibration lorsque le moteur (26) fait tourner l'arbre (28).

7. Dispositif de délivrance de stimulus vibratoire selon la revendication 6, dans lequel ledit moteur (26) est disposé au sein dudit boîtier de sonde de ladite sonde vibratoire.

8. Dispositif de délivrance de stimulus vibratoire selon la revendication 6, dans lequel ledit vibreur génère une vibration avec une direction parallèle à l'arbre (28).

9. Dispositif de délivrance de stimulus vibratoire selon la revendication 1, dans lequel ladite sonde vibratoire est attachée au dispositif de détection de déclenchement de stimulus.
